(19) Europäisches Patentamt / European Patent Office / Office européen des brevets

(11) **EP 3 833 146 B1**

(12) **EUROPEAN PATENT SPECIFICATION**

(45) Date of publication and mention
of the grant of the patent:
**14.01.2026 Bulletin 2026/03**

(21) Application number: **18930354.8**

(22) Date of filing: **17.08.2018**

(51) International Patent Classification (IPC):
**H04L 5/00** *(2006.01)*          **H04W 72/23** *(2023.01)*
**H04W 72/044** *(2023.01)*

(52) Cooperative Patent Classification (CPC):
**H04L 5/0094; H04L 5/0044; H04L 5/0048;
H04W 72/23;** H04W 72/044

(86) International application number:
**PCT/CN2018/101201**

(87) International publication number:
**WO 2020/034226 (20.02.2020 Gazette 2020/08)**

(54) **DOWNLINK CONTROL INFORMATION TRANSMISSION METHOD AND APPARATUS**

VERFAHREN UND VORRICHTUNG ZUR ÜBERTRAGUNG VON
DOWNLINK-STEUERUNGSINFORMATIONEN

PROCÉDÉ ET APPAREIL DE TRANSMISSION D'INFORMATIONS DE COMMANDE DE LIAISON
DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.06.2021 Bulletin 2021/23**

(73) Proprietor: **Huawei Technologies Co., Ltd.
Longgang District
Shenzhen, Guangdong 518129 (CN)**

(72) Inventors:
• **ZHANG, Dagang**
**Shenzhen, Guangdong 518129 (CN)**
• **SONG, Zhaohong**
**Shenzhen, Guangdong 518129 (CN)**
• **TAO, Maozhi**
**Shenzhen, Guangdong 518129 (CN)**

(74) Representative: **Maiwald GmbH
Elisenhof
Elisenstraße 3
80335 München (DE)**

(56) References cited:
EP-A1- 2 941 077          WO-A1-2017/136056
WO-A2-2013/025547       CN-A- 104 349 491
CN-A- 104 704 755         CN-A- 105 027 481

• ERICSSON: "Design aspects of sPDSCH", vol.
RAN WG1, no. Prague, Czech Republic;
20171009 - 20171013, 8 October 2017
(2017-10-08), XP051340359, Retrieved from the
Internet <URL:http://www.3gpp.org/ftp/
Meetings_3GPP_SYNC/RAN1/Docs/> [retrieved
on 20171008]

## Description

### TECHNICAL FIELD

This application relates to the field of communications technologies, and in particular, to a downlink control information transmission method and an apparatus.

### BACKGROUND

In a long term evolution-advanced (long term evolution advanced, LTE-A) system, when a network device (for example, a base station) sends data to a terminal device (for example, user equipment (user equipment, UE)) through a physical downlink shared channel (physical downlink shared channel, PDSCH), downlink control information (downlink control information, DCI) carried on a physical downlink control channel (physical downlink control channel, PDCCH) needs to be used to indicate a time-frequency domain resource position of the PDSCH.

The network device may configure different transmission modes (transmission mode, TM) (for example, TM 1, TM 2, TM 3, TM 4, TM 5, TM 6, TM 7, TM 8, TM 9, and TM 10) for the terminal device, and the different transmission modes may correspond to DCI in different formats. When the terminal device is in TM 7, TM 8, TM 9, TM 10, or the like, the terminal device may demodulate the PDSCH based on a demodulation reference signal (demodulation reference signal, DMRS). The network device may send DCI in different formats to the terminal device based on a transmission mode (for example, TM 7, TM 8, or TM 9) of the terminal device. For example, the terminal device is in TM 7, and the network device sends DCI in a format 1 to the terminal device. Resources used to carry a PDCCH in a network are limited. As terminal devices in the network increase, the network device needs to send more DCI. In addition, some DCI (for example, the DCI in the format 1) that uses a resource allocation type 0 or a resource allocation type 1 occupies a relatively large quantity of bits. As a result, resources for carrying the PDCCH are insufficient.

In view of this, the conventional technology proposes a method for carrying DCI by using an ePDCCH, where the ePDCCH refers to a newly-defined PDCCH in a resource region carrying a PDSCH. In this way, a network device can not only carry DCI on an original PDCCH used to carry DCI, but also carry DCI on the ePDCCH, thereby improving a PDCCH capacity. The method can only be used by a network device and a terminal device that support the ePDCCH. However, implementation of the network device and the terminal device that support the ePDCCH is relatively complex. Currently, there are a relatively small quantity of network devices and terminal devices that support the ePDCCH, and implementation is relatively difficult. In addition, this manner occupies some PDSCH resources. Consequently, resources used for data transmission are reduced, and air interface usage efficiency is reduced.

As an example, International patent application WO 2013/025547 A2 discloses systems, methods and instrumentalities for downlink resource allocation with a shared frequency band.

### SUMMARY

Embodiments of this application provide a downlink control information transmission method and an apparatus, to resolve a problem that an existing method for improving a PDCCH capacity is relatively difficult to implement, occupies some PDSCH resources, and reduces air interface usage efficiency. The invention is set out in the appended claims.

### BRIEF DESCRIPTION OF DRAWINGS

FIG. 1 is a schematic diagram of an applicable network architecture according to an embodiment of this application;
FIG. 2 is a schematic diagram of transmission mode switching according to an embodiment of this application;
FIG. 3 is a schematic diagram of a DCI bearer according to an embodiment of this application;
FIG. 4 is a flowchart of a downlink control information transmission method according to an embodiment of this application;
FIG. 5 is a flowchart of another downlink control information transmission method according to an embodiment of this application;
FIG. 6 is a schematic structural diagram of a downlink control information transmission apparatus according to an embodiment of this application; and
FIG. 7 is a schematic structural diagram of another downlink control information transmission apparatus according to an embodiment of this application.

## DESCRIPTION OF EMBODIMENTS

The following describes technical solutions in embodiments of this application.

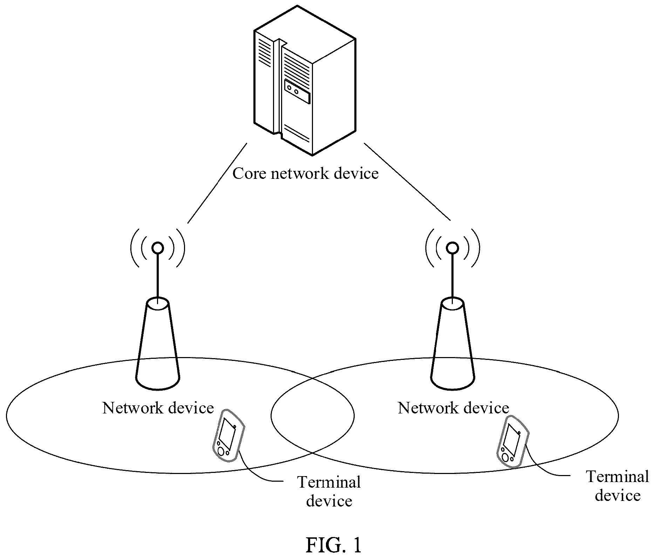

A downlink control information transmission method in this application is applicable to a network architecture in which a network device interacts with a terminal device. FIG. 1 is a schematic diagram of a network architecture to which an embodiment of this application may be applied. As shown in FIG. 1, a terminal device may access a wireless network via a network device, to obtain a service of an external network (for example, the Internet) by using the wireless network, or communicate with another terminal device by using the wireless network. The wireless network includes the network device and a core network device. The core network device is configured to manage a terminal device and provide a gateway for communicating with the external network.

With reference to the system architecture shown in FIG. 1, some terms used in this application are described, to facilitate understanding for a person skilled in the art.

(1) A terminal device may be a device that provides voice and/or data connectivity for a user, and is also referred to as user equipment (user equipment, UE), a mobile station (mobile station, MS), a mobile terminal (mobile terminal, MT), or the like, for example, a handheld device or a vehicle-mounted device that has a wireless connection function. Currently, for example, the terminal device is a mobile phone (mobile phone), a tablet computer, a notebook computer, a palmtop, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in a remote surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

(2) A network device may be a device in a wireless network, for example, a radio access network (radio access network, RAN) node (or device) that connects a terminal device to the wireless network, and may also be referred to as a base station. Currently, for example, the RAN nodes is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB or a home NodeB, HNB), a baseband unit (base band unit, BBU), a wireless fidelity (wireless fidelity, Wi-Fi) access point (access point, AP), or the like. In addition, in a network structure, a RAN may include a centralized unit (centralized unit, CU) node and a distributed unit (distributed unit, DU) node. In this structure, a protocol layer of an eNB in a long term evolution (long term evolution, LTE) system is divided, where some functions of the protocol layer are centrally controlled by the CU, the remaining functions or all functions of the protocol layer are distributed in the DU, and the DU is centrally controlled by the CU.

(3) A system bandwidth is a bandwidth supported by a carrier in a communications system, and may also be referred to as a carrier bandwidth, a carrier, or the like. For example, an existing system bandwidth may be one of 1.4 MHz, 5 MHz, 10 MHz, 15 MHz, 20 MHz, and the like. The downlink control information transmission method provided in this application may be applied to a communications system whose system bandwidth is 20 MHz, or may be applied to a communications system whose system bandwidth is 10 MHz, 15 MHz, 1.4 MHz, or 5 MHz. This is not limited in this application.

(4) A resource allocation type 0 means that resource allocation is performed based on a resource block group (resource block group, RBG). The RBG is a group of consecutive centralized virtual resource blocks (virtual resource block, VRB). DCI indicating a resource position based on the resource allocation type 0 may indicate, by using a bitmap (bitmap), an RBG allocated to a terminal device. Each bit in the bitmap corresponds to one RBG, and a most significant bit represents an RBG 0. If an RBG is allocated to a terminal device, a corresponding bit in the bitmap is set to 1. Otherwise, the corresponding bit is set to 0. To be specific, when a bit in the bitmap is set to 1, it indicates that an RBG corresponding to the bit is occupied; when a bit in the bitmap is set to 0, it indicates that an RBG corresponding to the bit is not occupied. For example, if a bitmap allocated to a terminal device is "1001110100010", it indicates that RBGs allocated to the terminal device include an RBG 0, an RBG 3, an RBG 4, an RBG 5, an RBG 7 and an RBG 11. A size P of an RBG (a quantity of VRBs included in each RBG) is related to the system bandwidth. For a relationship between a size P of an RBG and a system bandwidth, refer to Table 1.

**Table 1**

| System bandwidth (RB) $N_{RB}^{DL}$ | RBG size P (unit: number) |
|---|---|
| Less than or equal to 10 | 1 |
| 11-26 | 2 |
| 27-63 | 3 |

(continued)

| System bandwidth (RB) $N_{RB}^{DL}$ | RBG size P (unit: number) |
|---|---|
| 64-110 | 4 |

A relationship between a system bandwidth $N_{RB}^{DL}$ and a total quantity of RBGs $N_{RBG}$ corresponding to the system bandwidth meets the following formula:

$$N_{RBG} = \left\lceil N_{RB}^{DL} / P \right\rceil .$$

For example, for a system bandwidth of 20 MHz (100 RBs), a bitmap may be represented by using 25 bits. If it needs to be indicated that the first 10 RBGs are occupied, a corresponding bitmap is "1111111111000000000000000". The resource allocation type 0 supports discontinuous RB allocation in frequency domain. A scheduling granularity is relatively coarse, and a minimum scheduling unit is an RBG. For a relatively large system bandwidth, resources cannot be allocated based on a single RB, and a waste of resources may be caused.

(5) A resource allocation type 1 means that resource allocation is performed based on a resource block (resource block, RB), in other words, a minimum scheduling unit is an RB. In the resource allocation type 1, all RBGs are divided into Q subsets, and Q is an RBG size. Each RBG subset Q (Q is greater than or equal to 0 and less than P) includes all RBGs starting from an RBG Q, with an interval Q. RB resources allocated to a terminal device need to be from a same subset. DCI indicating a resource position based on the resource allocation type 1 may indicate, by using three fields, a VRB allocated to a terminal device (it should be noted that, the VRB instead of an RBG is allocated herein, which is different from the resource allocation type 0).

The first field includes $\left\lceil \log_2(P) \right\rceil$ bits, used to specify a selected RBG subset, in other words, a value of Q.

The second field includes a shift bit (shift bit), used to indicate whether a resource in the subset is offset. 1 indicates that a resource in the subset is offset, and 0 indicates that a resource in the subset is not offset.

The third field includes a bitmap, and each bit in the bitmap corresponds to one VRB in the selected RBG subset. A most significant bit represents the first VRB in the subset, a least significant bit represents the last VRB in the subset, and so on. If a VRB is allocated to a terminal device, a bit corresponding to the VRB in the bitmap is set to 1; otherwise, the bit is set to 0. A size of the bitmap, namely, a quantity of bits $N_{RB}^{type1}$ included in the bitmap, is

$$N_{RB}^{type1} = \left\lceil N_{RB}^{DL} / P \right\rceil - \left\lceil \log_2(P) \right\rceil - 1 .$$

A VRB in one selected RBG subset starts from a minimum VRB number in the subset plus a shift $\Delta_{shift}(Q)$, and corresponds to a most significant bit in the bitmap. The shift is represented as a quantity of VRBs and occurs in the selected RBG subset. If the second field in resource block allocation information of DCI is 0, a shift of an RBG subset Q is $\Delta_{shift}(Q) = 0$; or if the second field in resource block allocation information of DCI is 1, a shift of an RBG subset Q is

$$\Delta_{shift}(Q) = N_{RB}^{RBGsubset}(Q) - N_{RB}^{type1} ,$$ and a least significant bit in the bitmap is adjusted, to correspond to the last VRB in the RBG subset. $N_{RB}^{RBGsubset}(Q)$ is a quantity of VRBs included in the RBG subset Q, and a calculation formula is as follows:

$$N_{RB}^{RBGsubset}(Q) = \begin{cases} \left\lfloor \dfrac{N_{RB}^{DL}-1}{P^2} \right\rfloor \cdot P + P, & Q < \left\lfloor \dfrac{N_{RB}^{DL}-1}{P} \right\rfloor \bmod P \\[2ex] \left\lfloor \dfrac{N_{RB}^{DL}-1}{P^2} \right\rfloor \cdot P + (N_{RB}^{DL}-1) \bmod P + 1, & Q = \left\lfloor \dfrac{N_{RB}^{DL}-1}{P} \right\rfloor \bmod P \\[2ex] \left\lfloor \dfrac{N_{RB}^{DL}-1}{P^2} \right\rfloor \cdot P, & Q > \left\lfloor \dfrac{N_{RB}^{DL}-1}{P} \right\rfloor \bmod P \end{cases}$$

For the RBG subset Q, a VRB corresponding to each bit i ( $i=0, 1, ..., N_{RB}^{type1}-1$ ) in the bitmap of the RBG subset Q may be calculated by using the following formula:

$$ n_{VRB}^{RBGsubset}(Q) = \left\lfloor \frac{i + \Delta_{shift}(Q)}{P} \right\rfloor \cdot P^2 + Q \cdot P + (i + \Delta_{shift}(Q)) \bmod P . $$

(6) A resource allocation type 2 means that resource allocation is performed based on a VRB. In the resource allocation type 2, resources allocated to a terminal device are a segment of consecutive VRBs, and the VRBs may be centralized or distributed. In DCI that indicates a resource position based on the resource allocation type 2, there may be a field (which may be 1 bit) used to indicate whether a centralized VRB or a distributed VRB is used. For centralized VRB allocation, a VRB is equal to a PRB. The resource allocation type 2 may use three fields: a field indicating whether a centralized manner or distributed manner is used (which may be 1 bit), a field indicating a starting position of a VRB (which may be 7 bits), and a field indicating a quantity of occupied VRBs (which may be 7 bits), to indicate resources occupied by the terminal device.

(7) A transmission mode corresponds to a multi-antenna transmission solution (for example, single-antenna transmission, transmit diversity, beamforming, and spatial multiplexing) for data transmission between a network device and a terminal device. The transmission mode may be configured through RRC signaling. Currently, there are 10 different transmission modes defined for LTE-A, for example, TM 1, TM 2, TM 3, TM 4, TM 5, TM 6, TM 7, TM 8, TM 9, and TM 10. The network device may configure different transmission modes for the terminal device based on a channel condition. Different transmission modes may correspond to DCI in different formats, and DCI in different formats corresponds to different resource allocation types.

(8) A rollback mode is a transition mode defined for a transmission mode to facilitate switching from a current transmission mode to a new transmission mode. Because a channel condition changes, the terminal device does not always stay in a transmission mode stably. When a channel condition for communication between a terminal device and a network device changes, correspondingly, the terminal device needs to switch to a transmission mode that adapts to a current channel condition. Certainly, the network device also schedules the terminal device by using a DCI format corresponding to the current transmission mode. When the terminal device is in the rollback mode, the network device may schedule the terminal device by using a DCI format 1A. Table 2 below shows a DCI format and a resource allocation type that are corresponding to each transmission mode and rollback mode.

**Table 2**

| Transmission mode | DCI format (DCI format) | Resource allocation type |
|---|---|---|
| TM 1 | DCI format 1A (for a rollback mode) | Resource allocation type 2 |
| | DCI format 1 | Resource allocation type 0/Resource allocation type 1 |
| TM 2 | DCI format 1A (for a rollback mode) | Resource allocation type 2 |
| | DCI format 1 | Resource allocation type 0/Resource allocation type 1 |
| TM 3 | DCI format 1A (for a rollback mode) | Resource allocation type 2 |
| | DCI format 2A | Resource allocation type 0/Resource allocation type 1 |
| TM 4 | DCI format 1A (for a rollback mode) | Resource allocation type 2 |
| | DCI format 2 | Resource allocation type 0/Resource allocation type 1 |
| TM 5 | DCI format 1A (for a rollback mode) | Resource allocation type 2 |
| | DCI format 1D | Resource allocation type 0/Resource allocation type 1 |
| TM 6 | DCI format 1A (for a rollback mode) | Resource allocation type 2 |
| | DCI format 1B | Resource allocation type 0/Resource allocation type 1 |
| TM 7 | DCI format 1A (for a rollback mode) | Resource allocation type 2 |
| | DCI format 1 | Resource allocation type 0/Resource allocation type 1 |
| TM 8 | DCI format 1A (for a rollback mode) | Resource allocation type 2 |
| | DCI format 2B | Resource allocation type 0/Resource allocation type 1 |

(continued)

| Transmission mode | DCI format (DCI format) | Resource allocation type |
|---|---|---|
| TM 9 | DCI format 1A (for a rollback mode) | Resource allocation type 2 |
| | DCI format 2C | Resource allocation type 0/Resource allocation type 1 |
| TM 10 | DCI format 1A (for a rollback mode) | Resource allocation type 2 |
| | DCI format 2D | Resource allocation type 0/Resource allocation type 1 |

In the rollback mode, the terminal device needs to detect another additional DCI format in addition to a current DCI format. For example, in a subframe, when performing PDCCH blind detection, the terminal device generally needs to perform blind detection on two possible DCI formats used to indicate a downlink transmission configuration, where one is a DCI format corresponding to a current transmission mode, and the other is a DCI format corresponding to a rollback mode corresponding to the current transmission mode. When a channel condition between the network device and the terminal device changes, the current transmission mode should also change accordingly. In this case, a mode for sending a PDCCH needs to smoothly transit from an original transmission mode to the rollback mode and then to a new transmission mode. The following uses an example to describe transmission mode switching and DCI format switching caused by the transmission mode switching.

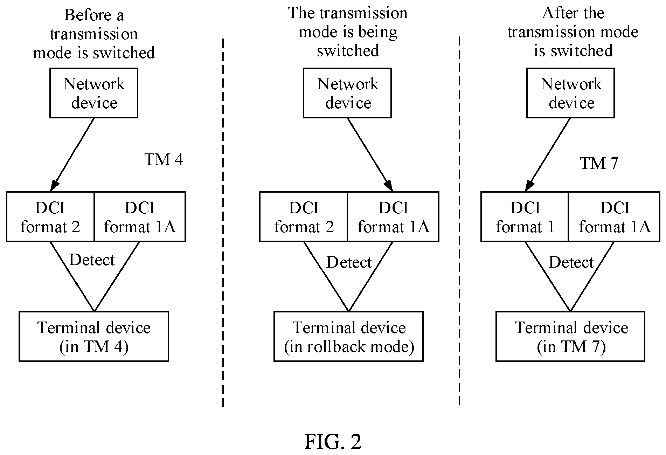

Referring to FIG. 2, it is assumed that a terminal device is in TM 4 before a transmission mode is switched. It can be learned from Table 2 that: When the terminal device is in TM 4, a network device sends downlink control information by using a DCI format 2. In this case, when the terminal device performs PDCCH blind detection, blind detection is performed on two DCI formats used to indicate a downlink transmission configuration, where one is the DCI format 2 corresponding to TM 4, and the other is a DCI format 1A corresponding to a rollback mode. Control information is successfully obtained when detection is performed by using the DCI format 2. It should be noted herein that, although the terminal device performs blind detection on two DCI formats, only the DCI format 2 can be successfully detected. In other words, when the terminal device is stably in a transmission mode, the network device schedules the terminal device by using only a DCI format corresponding to the transmission mode (DCI in the rollback mode is not used). If a channel condition between the network device and the terminal device changes, assuming that TM 4 needs to be switched to TM 7, in a transmission mode switching process, the network device sends the downlink control information by using the DCI format 1A corresponding to the rollback mode. In this case, the terminal device still performs blind detection by using the DCI format 2 and the DCI format 1A, and successfully obtains the control information when performing detection by using the DCI format 1A. In the transmission mode switching process, the network device may indicate, by using higher layer signaling, the terminal device to switch the transmission mode to TM 7, and the terminal device performs switching after receiving the higher layer signaling. After the transmission mode switching is completed, the network device delivers the control information by using the DCI format 1 corresponding to TM 7, and the terminal device performs blind detection by using the DCI format 1 corresponding to TM 7 and the DCI format 1A corresponding to the rollback mode. However, the control information is successfully obtained when detection is performed by using the DCI format 1.

(9) In descriptions of this application, "a plurality of" means two or more, and another quantifier is similar to this. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

(10) Terms "network" and "system" are often used interchangeably, but a person skilled in the art can understand meanings thereof. Terms "Information (information)", "signal (signal)", "message (message)", and "channel (channel)" may be interchangeably used sometimes. It should be noted that meanings expressed by the terms are consistent when differences of the terms are not emphasized. "Of (of)", "corresponding (corresponding, relevant)" and "corresponding (corresponding)" may be interchangeably used sometimes. It should be noted that meanings expressed by the terms are consistent when differences are not emphasized.

It should be noted that in the descriptions of this application, terms such as "first" and "second" are merely used for distinguishing descriptions, and cannot be understood as an indication or implication of relative importance, or an indication or implication of a sequence.

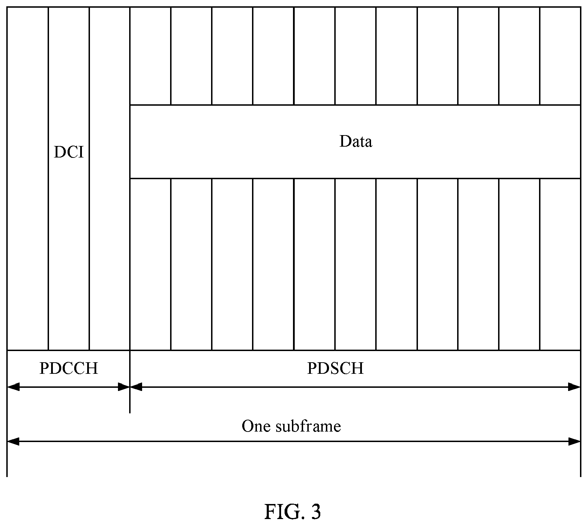

In the network architecture shown in FIG. 1, data transmission may be performed between the network device and the terminal device. The following uses downlink data transmission as an example for description. In an LTE-A system, downlink data of a terminal device is carried by a PDSCH, and DCI carried on a PDCCH indicates a time-frequency domain resource position of the PDSCH corresponding to the terminal device. Referring to FIG. 3, a configuration of a PDCCH and a configuration of a PDSCH in a subframe are used as examples. DCI corresponding to a terminal device is carried on the PDCCH. The terminal device searches all of a PDCCH region based on an agreed rule to check whether the DCI of the terminal device exists. If the DCI of the terminal device exists in the PDCCH region, corresponding downlink data is demodulated based on a time-frequency domain resource position of a PDSCH indicated by the DCI. The network device may configure different transmission modes for the terminal device based on a current channel condition. The different transmission modes may correspond to DCI in different formats. The DCI in different formats may occupy different quantities of bits on a PDCCH. Referring to Table 3, a bandwidth of 20 MHz is used as an example. A possible relationship between a DCI format and a quantity of occupied bits is provided.

Table 3

| DCI format | Bandwidth of 20 MHz (100 PRBs) |
|---|---|
| DCI format 1 | 55 |
| DCI format 1A | 44 |
| DCI format 1B/1D (two transmission antenna ports) | 46 |
| DCI format 1B/1D (four transmission antenna ports) | 48 |
| DCI format 1C | 31 |
| DCI format 2 (two transmission antenna ports) | 67 |
| DCI format 2 (four transmission antenna ports) | 70 or 66 |
| DCI format 2A (two transmission antenna ports) | 64 |
| DCI format 2B (two or four transmission antenna ports) | 64 |
| DCI format 2C | 66 |

It can be learned from Table 2 that: When the terminal device is stably in transmission modes such as TM 7, TM 8, TM 9, and TM 10 in which a PDSCH is demodulated based on a DMRS, the network device may schedule the terminal device by using the DCI format 1, the DCI format 2B, the DCI format 2C, and the DCI format 2D respectively. All the DCI formats indicate resource positions based on the resource allocation type 0 or the resource allocation type 1, and DCI using the resource allocation type 0 or the resource allocation type 1 occupies a relatively large quantity of bits. Resources used to carry a PDCCH in a network are limited, and the network device needs to send more DCI as terminal devices in the network increase, resulting in a shortage of resources for carrying the PDCCH. The conventional technology provides a method for carrying DCI by using an ePDCCH, so that a network device can not only carry DCI on an original PDCCH used to carry DCI, but also carry DCI on a PDSCH. The method can only be used by a network device and a terminal device that support the ePDCCH. However, implementation of the network device and the terminal device that support the ePDCCH is relatively complex and difficult, and this manner occupies some PDSCH resources.

Embodiments of this application provide a downlink control information transmission method and an apparatus to resolve the foregoing problem. When determining that a terminal device is in a first transmission mode in which a PDSCH is demodulated based on a DMRS, a network device no longer schedules the terminal device by using an existing DCI format that indicates a resource position based on a resource allocation type 0 or resource allocation type 1. Instead, the network device schedules the terminal device by using a DCI format that is newly defined in this application and that indicates a resource position based on a resource allocation type 2. A quantity of used bits of a resource position indication manner based on the resource allocation type 0 or the resource allocation type 1 is greater than a quantity of used bits of a resource position indication manner based on the resource allocation type 2. Therefore, the method provided in this application can improve a PDCCH capacity without occupying a PDSCH resource. In addition, the method has no new requirement for the terminal device and the network device, and a terminal device and a network device that do not support the ePDCCH may also use the method provided in this application.

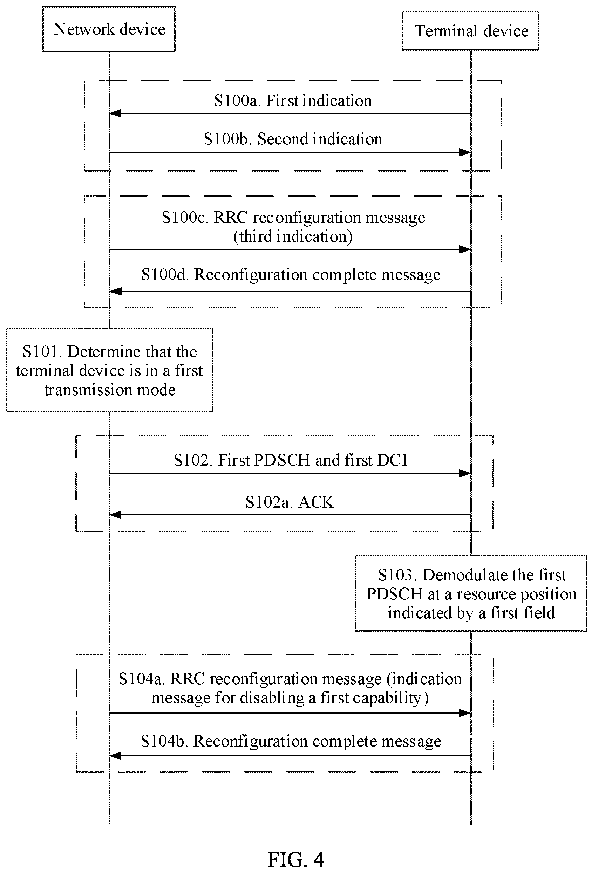

FIG. 4 is a flowchart of a downlink control information transmission method according to an embodiment of this application, including the following steps.

S101. A network device determines that a terminal device is in a first transmission mode.

In this embodiment of this application, the first transmission mode is a transmission mode in which a PDSCH is demodulated based on a DMRS. For example, the first transmission mode may be any one of transmission modes TM 7, TM 8, TM 9, and TM 10. In other words, a DCI transmission method provided in this application may be applicable to a plurality of transmission modes in which a PDSCH is demodulated based on a DMRS, for example, TM 7, TM 8, TM 9, or TM 10.

S102. The network device sends a first PDSCH to the terminal device, and sends first DCI to the terminal device. The terminal device receives the first PDSCH from the network device, and receives the first DCI from the network device. The network device may separately send the first PDSCH and the first DCI to the terminal device, or may simultaneously send the first PDSCH and the first DCI to the terminal device. This is not limited in this application. In this embodiment of this application, the first DCI includes a first field, a second field and a third field. The first field is used to indicate a resource position occupied by the first PDSCH. The first field indicates the resource position based on a resource allocation type 2. The second field is used to indicate a type of the resource allocation type 2, and the type includes a centralized resource allocation type or a distributed resource allocation type. The third field is used to indicate the terminal device to demodulate the first PDSCH based on a DMRS.

It should be noted that when the terminal device is in the first transmission mode, the terminal device can learn that the PDSCH is demodulated by using a DMRS. In some scenarios, a length of the first DCI format that is newly defined may be the same as a length of a DCI format 1A, and the terminal device may determine, based on a length of a DCI format during blind detection of the DCI, a DCI format sent by the network device. Therefore, to distinguish between the newly-defined first DCI format and the DCI format 1A, a third field is added to the newly-defined first DCI in this embodiment of this application. The third field may be used to indicate the terminal device to demodulate the first PDSCH based on a DMRS, or may not be used to indicate information, and is used only to distinguish between lengths. Certainly, the third field may be used to indicate other information. This is not limited in this application.

S103. After receiving the first PDSCH and the first DCI, the terminal device demodulates the first PDSCH at the resource position indicated by the first field.

In this embodiment of this application, when determining that the terminal device is in the first transmission mode, the network device no longer schedules the terminal device by using an existing DCI format, but schedules the terminal device by using the first DCI newly defined in this application. The existing DCI format used for scheduling the terminal device that is in the first transmission mode indicates a resource position based on a resource allocation type 0 or a resource allocation type 1. In this application, the first DCI used for scheduling the terminal device that is in the first transmission mode indicates the resource position based on the resource allocation type 2. A quantity of used bits of a resource position indication manner based on the resource allocation type 0 or the resource allocation type 1 is greater than a quantity of used bits of a resource position indication manner based on the resource allocation type 2. Therefore, the method provided in this application can reduce a quantity of bits of a PDCCH occupied by DCI that is used for scheduling a terminal device, and the PDCCH can carry more DCI, thereby improving a PDCCH capacity. In this embodiment of this application, after the terminal device accesses a network, the network device and the terminal device may determine, through negotiation, that scheduling by using the new DCI format is supported; or capability negotiation may not be performed, and the two parties agree by default that when the terminal device is in the first transmission mode, the network device schedules the terminal device by using the newly-defined first DCI. Therefore, the quantity of bits of the PDCCH occupied by DCI used for scheduling the terminal device can be reduced, and the PDCCH can carry more DCI, thereby improving the PDCCH capacity.

For example, referring to S100a in FIG. 4, before determining that the terminal device is in the first transmission mode, the network device may further receive a first indication from the terminal device, where the first indication is used to indicate that the terminal device has a first capability, and the first capability is a capability of demodulating the first PDSCH at the resource position indicated by the first field. According to the method, before communicating with the network device, the terminal device may send a message to the network device to report that the terminal device has the first capability. The network device may schedule the terminal device by using the first DCI newly defined in this application only after knowing that the terminal device has the first capability. For a terminal device that does not have the first capability, the network device may still perform scheduling by using the existing DCI format. In this way, the network device can not only schedule, by flexibly using a DCI format, the terminal device that is in the first transmission mode, but also reduce a probability of a receiving failure that occurs when the network device sends the newly-defined first DCI to a terminal device that does not have the first capability.

It may be understood that, after receiving the capability reported by the terminal device, if the network device supports scheduling the terminal device by using the first DCI, the network device may directly use the newly-defined first DCI to schedule the terminal device, or may notify the terminal device of the capability supported by the network device.

In an example, referring to S100b in FIG. 4, after receiving the first indication from the terminal device, the network device may further send a second indication to the terminal device. The second indication is used to indicate that the network device has a second capability. The second capability is a capability of the network device to send the first DCI to the terminal device when the terminal device is in the first transmission mode. According to the method, after the terminal device reports, to the network device, that the terminal device has the first capability, the network device may further deliver, to the terminal device, a message to notify the terminal device that the network device has the second capability. In this way, the capability negotiation can be completed between the network device and the terminal device.

It should be noted that, if the network device does not have the second capability, after receiving the first indication from the terminal device, the network device may make no response, or may send, to the terminal device, a message indicating that the network device does not have the second capability.

In a possible implementation, before determining that the terminal device is in the first transmission mode, the network device may further send a third indication to the terminal device, where the third indication is used to indicate the terminal device to enable the first capability. According to the method, after determining that the terminal device is switched to the first transmission mode, the network device may deliver a message to the terminal device to indicate the terminal device to enable the first capability, so that the network device may schedule the terminal device by using the first DCI newly defined in this application.

In this embodiment of this application, how the network device delivers the third indication to the terminal device is not limited.

In a possible implementation, referring to S100c in FIG. 4, the network device may add the third indication to a radio resource control (radio resource control, RRC) reconfiguration message used for transmission mode switching in a transmission mode switching process. Certainly, the third indication may alternatively be carried in another existing message, or may be carried in a newly added message. This is not limited in this application. It should be noted that the terminal device may further send a reconfiguration complete message to the network device after switching to a new transmission mode. Refer to S 100d in FIG. 4.

It can be understood that the network device may not indicate, by using the third indication, the terminal device to enable the first capability. Instead, the two parties agree that: If the network device has the second capability and the terminal device has the first capability, when the network device determines that the terminal device is in the first transmission mode, the network device and the terminal device enable corresponding capabilities by default, in other words, the network device enables the second capability, and the terminal device enables the first capability. In this way, after the network device and the terminal device enable the corresponding capabilities, the network device may schedule the terminal device that is in the first transmission mode by using the first DCI.

In a possible implementation, after receiving the first DCI sent by the network device, the terminal device may further send an acknowledgment message (ACK) to the network device, as shown in S102a in FIG. 4.

In this embodiment of this application, when the terminal device switches to a transmission mode other than the first transmission mode, the network device may send, to the terminal device, an indication message used to indicate the terminal device to disable the first capability. In a possible implementation, referring to S104a in FIG. 4, in a transmission mode switching process, the network device may send, to the terminal device, the indication message used to indicate the terminal device to disable the first capability. It should be noted that the terminal device may further send a reconfiguration complete message to the network device after switching to a new transmission mode. Refer to S104b in FIG. 4.

Embodiments of this application further provide another downlink control information transmission method and an apparatus, to improve a PDCCH capacity without occupying a PDSCH resource.

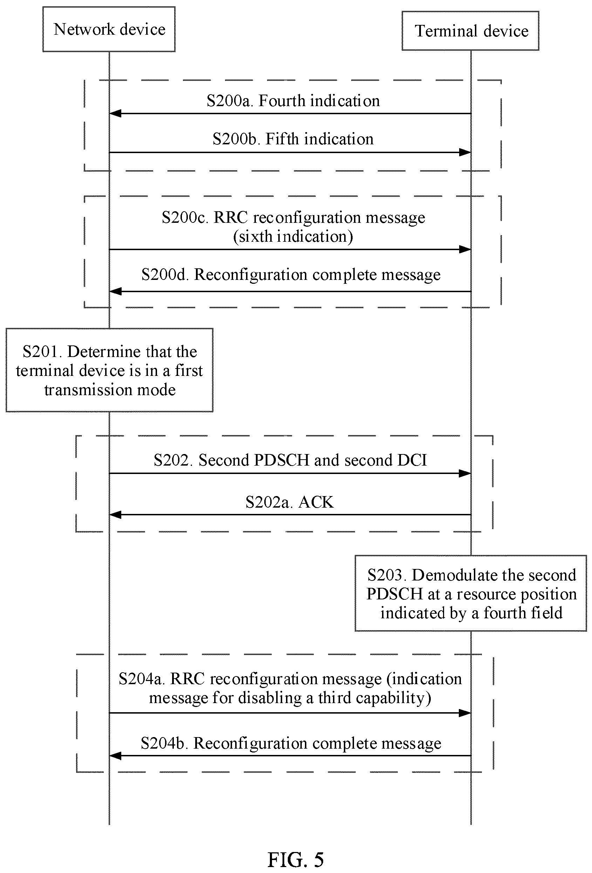

FIG. 5 is a flowchart of another downlink control information transmission method according to an embodiment of this application, including the following steps.

S201. A network device determines that a terminal device is in a first transmission mode.

In this embodiment of this application, the first transmission mode is a transmission mode in which a PDSCH is demodulated based on a DMRS. For example, the first transmission mode is any one of transmission modes TM 8, TM 9, and TM 10. In other words, a DCI transmission method provided in this application is applicable to a plurality of transmission modes in which a PDSCH is demodulated based on a DMRS, for example, TM 8, TM 9, or TM 10.

S202. The network device sends a second PDSCH to the terminal device, and sends second DCI to the terminal device. The terminal device receives the second PDSCH from the network device, and receives the second DCI from the network device. The network device may separately send the second PDSCH and the second DCI to the terminal device, or may simultaneously send the second PDSCH and the second DCI to the terminal device. This is not limited in this application.

In the present invention, the second DCI includes a fourth field and a fifth field. The fourth field is used to indicate a resource position occupied by the second PDSCH. The fourth field indicates the resource position based on a resource allocation type 2. The fifth field is used to indicate a type of the resource allocation type 2, and the type includes a centralized resource allocation type or a distributed resource allocation type.

S203. After receiving the second PDSCH and the second DCI, the terminal device demodulates the second PDSCH at the resource position indicated by the fourth field.

In the present invention, when determining that the terminal device is in the first transmission mode, the network device no longer schedules the terminal device by using an existing DCI format, but schedules the terminal device by using the second DCI newly defined in this application. The existing DCI format used for scheduling the terminal device that is in the first transmission mode indicates a resource position based on a resource allocation type 0 or a resource allocation type 1. In the present invention, the second DCI used for scheduling the terminal device that is in the first transmission mode indicates the resource position based on the resource allocation type 2. A quantity of used bits of a resource position indication manner based on the resource allocation type 0 or the resource allocation type 1 is greater than a quantity of used bits of a resource position indication manner based on the resource allocation type 2. Therefore, the method provided in this application can reduce a quantity of bits of a PDCCH occupied by DCI that is used for scheduling a terminal device, and the PDCCH can carry more DCI, thereby improving a PDCCH capacity. In this embodiment of this application, after the terminal device accesses a network, the network device and the terminal device may determine, through negotiation, that scheduling by using the new DCI format is supported; or capability negotiation may not be performed, and the two parties agree by default that when the terminal device is in the first transmission mode, the network device schedules the terminal device by using the newly-defined second DCI. Therefore, the quantity of bits of the PDCCH occupied by DCI used for scheduling the terminal device can be reduced, and the PDCCH can carry more DCI, thereby improving the PDCCH capacity.

In a possible example, referring to S200a in FIG. 5, before determining that the terminal device is in the first transmission mode, the network device may further receive a fourth indication from the terminal device, where the fourth indication is used to indicate that the terminal device has a third capability, and the third capability is a capability of demodulating the second PDSCH at the resource position indicated by the fourth field. For details, refer to the description of S100a in FIG. 4. Details are not described herein again.

It may be understood that, after receiving the capability reported by the terminal device, if the network device supports scheduling the terminal device by using the second DCI, the network device may directly use the newly-defined second DCI to schedule the terminal device, or may notify the terminal device of the capability supported by the network device.

In another possible example, referring to S200b in FIG. 5, after receiving the fourth indication from the terminal device, the network device may further send a fifth indication to the terminal device. The fifth indication is used to indicate that the network device has a fourth capability. The fourth capability is a capability of the network device to send the second DCI to the terminal device when the terminal device is in the first transmission mode. For details, refer to the description of S100b in FIG. 4. Details are not described herein again.

It should be noted that, if the network device does not have the fourth capability, after receiving the fourth indication from the terminal device, the network device may make no response, or may send, to the terminal device, a message indicating that the network device does not have the fourth capability.

In a possible implementation, before determining that the terminal device is in the first transmission mode, the network device may further send a sixth indication to the terminal device, where the sixth indication is used to indicate the terminal device to enable the third capability.

In this embodiment of this application, how the network device delivers the sixth indication to the terminal device is not limited.

In a possible implementation, referring to S200c in FIG. 5, the network device may add the sixth indication to an RRC reconfiguration message used for transmission mode switching in a transmission mode switching process. Certainly, the sixth indication may alternatively be carried in another existing message, or may be carried in a newly added message. This is not limited in this application. After switching to a new transmission mode, the terminal device may further send a reconfiguration complete message to the network device. Refer to S200d in FIG. 5.

It can be understood that the network device may not indicate, by using the sixth indication, the terminal device to enable the third capability. Instead, the two parties agree that: If the network device has the fourth capability and the terminal device has the third capability, when the network device determines that the terminal device is in the first transmission mode, the network device and the terminal device enable corresponding capabilities by default, in other words, the network device enables the fourth capability, and the terminal device enables the third capability. In this way, after the network device and the terminal device enable the corresponding capabilities, the network device may schedule the terminal device that is in the first transmission mode by using the second DCI.

In a possible implementation, after receiving the second DCI sent by the network device, the terminal device may further send an acknowledgment message (ACK) to the network device, as shown in S202a in FIG. 5.

In this embodiment of this application, when the terminal device switches to a transmission mode other than the first transmission mode, the network device may send, to the terminal device, an indication message used to indicate the terminal device to disable the third capability. In a possible implementation, referring to S204a in FIG. 5, in a transmission mode switching process, the network device may send, to the terminal device, the indication message used to indicate the terminal device to disable the third capability. It should be noted that the terminal device may further send a reconfiguration complete message to the network device after switching to a new transmission mode. Refer to S204b in FIG. 5.

The foregoing mainly describes the solutions provided in this application from a perspective of interaction between network elements. It may be understood that to implement the foregoing functions, the network elements include corresponding hardware structures and/or software modules for performing the functions. A person of ordinary skill in the art should easily be aware that, in combination with the examples described in the embodiments disclosed in this specification, units and algorithms steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

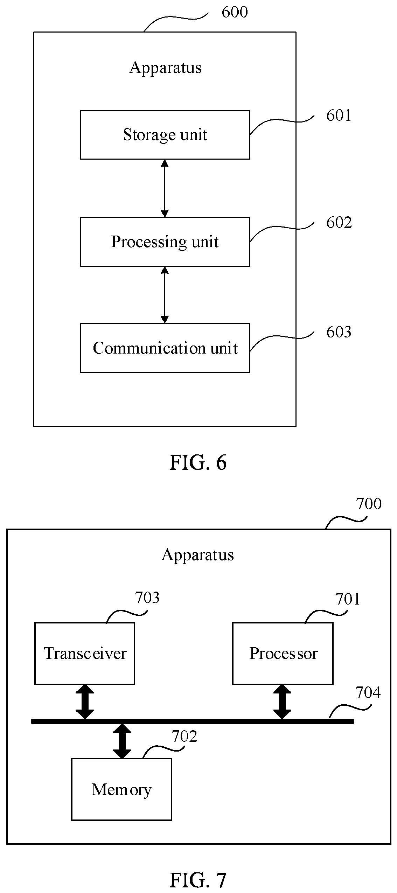

When an integrated unit is used, FIG. 6 is a possible example block diagram of an apparatus in an embodiment of the present invention. The apparatus 600 may exist in a form of software, may be a terminal device or a network device, or may be a chip in a terminal device or a chip in a network device. The apparatus 600 includes a processing unit 602 and a communication unit 603. The processing unit 602 is configured to control and manage an action of the apparatus 600. For example, when the apparatus 600 is a terminal device, the processing unit 602 may be configured to support the apparatus 600 in performing technical processes such as S103 in FIG. 4 and S203 in FIG. 5. When the apparatus 600 is a network device, the processing unit 602 may be configured to support the apparatus 600 in performing technical processes such as S101 in FIG. 4 and S201 in FIG. 5. The communication unit 603 is configured to support the apparatus 600 in communicating with another network entity. When the apparatus 600 is a terminal device, the communication unit 603 may be configured to support the apparatus 600 in performing S100a, S100b, S100c, S100d, S102, S102a, S104a, and S104b in FIG. 4, or may be configured to support the apparatus 600 in performing technical processes such as S200a, S200b, S200c, S200d, S202, S202a, S204a, and S204b in FIG. 5. When the apparatus 600 is a network device, the communication unit 603 may be configured to support the apparatus 600 in performing S100a, S100b, S100c, S100d, S102, S102a, S104a, and S104b in FIG. 4, or may be configured to support the apparatus 600 in performing technical processes such as S200a, S200b, S200c, S200d, S202, S202a, S204a, and S204b in FIG. 5. The apparatus 600 may further include a storage unit 601, configured to store program code and data of the apparatus 600.

The processing unit 602 may be a processor or a controller, such as a general-purpose central processing unit (central processing unit, CPU), a general-purpose processor, a digital signal processor (digital signal processing, DSP), an application-specific integrated circuit (application-specific integrated circuits, ASIC), a field programmable gate array (field programmable gate array, FPGA), another programmable logic device, a transistor logic device, a hardware component, or any combination thereof. The processing unit 602 may implement or execute various example logical blocks, modules, and circuits described with reference to content disclosed in the present invention. The processor may alternatively be a combination of processors implementing a computing function, for example, a combination of one or more microprocessors or a combination of a DSP and a microprocessor. The communication unit 603 may be a communication interface, a transceiver, a transceiver circuit, or the like. The storage unit 601 may be a memory. When the processing unit 602 is a processor, the communication unit 603 is a transceiver, and the storage unit 601 is a memory, the apparatus 600 in this embodiment of the present invention may also be an apparatus shown in FIG. 7. FIG. 7 is a possible schematic diagram of a logical structure of an apparatus in the foregoing embodiments of this application. As shown in FIG. 7, the apparatus 700 may include at least one processor 701. In this embodiment of this application, the processor 701 is configured to control and manage an action of the apparatus. Optionally, the apparatus may further include a memory 702 and a transceiver 703. The processor 701, the transceiver 703, and the memory 702 may be connected to each other or connected to each other by using a communication bus 704. The memory 702 is configured to store code and data of the apparatus. The transceiver 703 is configured to support the apparatus in performing communication.

The following describes each component of the apparatus in detail.

The processor 701 is a control center of the apparatus, and may be a processor or a collective name for a plurality of processing elements. For example, the processor 701 may be a CPU, may be implemented in an ASIC manner, or one or more integrated circuits configured to implement this embodiment of the present invention, for example, one or more DSPs, or one or more FPGAs.

The processor 701 may perform various functions of the apparatus 700 by running or executing a software program stored in the memory 702 and invoking data stored in the memory 702.

The memory 702 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (Electrically Erasable Programmable Read-Only Memory, EEPROM), a compact disc read-only memory (Compact Disc Read-Only Memory, CD-ROM) or another compact disc storage, or an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. This is not limited. The memory 702 may exist independently, and is connected to the processor 701 by using the communication bus 704. The memory 702 may be integrated with the processor 701.

The transceiver 703 is any apparatus such as a transceiver, and is configured to communicate with another node. The transceiver 703 may be further configured to communicate with a communications network, such as Ethernet, a radio access network (radio access network, RAN), or a wireless local area network (Wireless Local Area Networks, WLAN). The transceiver 703 may include a receiving unit for implementing a receiving function and a sending unit for implementing a sending function.

The communication bus 704 may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 7, but this does not mean that there is only one bus or only one type of bus.

The structure of the device shown in FIG. 7 does not constitute a limitation on the apparatus. The apparatus may include components more or fewer than those shown in FIG. 7, or combine some components, or have a different component arrangement.

An embodiment of this application further provides a computer storage medium, configured to store a computer software instruction used by the apparatuses shown in FIG. 6 and FIG. 7. The computer software instruction includes program code designed for performing the foregoing method embodiments. Downlink control information can be transmitted by executing the stored program code.

An embodiment of this application further provides a computer program product. The computer program product includes a computer software instruction, where the computer software instruction may be loaded by using a processor to implement the method in the foregoing method embodiments.

An embodiment of this application further provides a chip system. The chip system includes a processor, and may further include a memory. The chip system may be configured to perform the method in the foregoing embodiment of this application. The chip system may include a chip, or may include a chip and another discrete device.

All or some of the foregoing embodiments may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on a computer, the procedure or functions according to the embodiments of the present invention are completely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

The various illustrative logical units and circuits described in the embodiments of this application may implement or operate the described functions by using a general purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, a controller, a microcontroller, or a state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in the embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, a storage medium may connect to a processor, so that the processor may read information from the storage medium and write information to the storage medium. Alternatively, the storage medium may further be integrated into the processor. The processor and the storage medium may be disposed in an ASIC, and the ASIC may be disposed in a terminal device. Optionally, the processor and the storage medium may alternatively be disposed in different components of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

**Claims**

1. A downlink control information transmission method, comprising:

    determining (S201), by a network device, that a terminal device is in a first transmission mode, wherein the first transmission mode is a transmission mode in which a physical downlink shared channel, PDSCH, corresponding to the first transmission mode is demodulated based on a demodulation reference signal, DMRS, corresponding to the first transmission mode; and

when determining that the terminal device is in the first transmission mode, sending (S202), by the network device, a first PDSCH to the terminal device, and sending first downlink control information, DCI, to the terminal device, wherein the first DCI comprises a first field and a second field, the first field is used to indicate a resource position occupied by the first PDSCH, the first field indicates the resource position based on a resource allocation type 2, the second field is used to indicate a type of the resource allocation type 2, and the type comprises a centralized resource allocation type or a distributed resource allocation type.

2. The method according to claim **1,** wherein the first transmission mode comprises any one of transmission modes, TM 8, TM 9, and TM 10.

3. The method according to claim **1,** wherein the first DCI further comprises a third field and the third field is used to indicate the terminal device to demodulate the first PDSCH based on a DMRS.

4. The method according to claim 3, wherein the first transmission mode comprises any one of transmission modes, TM 7, TM 8, TM 9, and TM 10.

5. A network device, comprising a memory (702), a transceiver (703), and a processor (701), wherein

the memory (702) stores a computer program; and
the processor (701) is configured to invoke the computer program stored in the memory (702) to perform the method described in any one of claims 1 to 4.

6. A computer readable storage medium, configured to store program code, and the program code includes an instruction for performing the method described in any one of claims 1 to 4.

7. A computer program product comprising an instruction, wherein when the instruction is run on a computer, the computer is enabled to perform the method according to any one of claims 1 to 4.


**Patentansprüche**

1. Verfahren zur Übertragung von Downlink-Steuerungsinformationen, umfassend:

Bestimmen (S201), durch eine Netzwerkeinrichtung, dass sich eine Endgeräteeinrichtung in einem ersten Übertragungsmodus befindet, wobei der erste Übertragungsmodus ein Übertragungsmodus ist, in dem ein gemeinsam genutzter physischer Downlink-Kanal, PDSCH, der dem ersten Übertragungsmodus entspricht, basierend auf einem Demodulationsreferenzsignal, DMRS, das dem ersten Übertragungsmodus entspricht, demoduliert wird; und
wenn bestimmt wird, dass sich die Endgeräteeinrichtung in dem ersten Übertragungsmodus befindet, Senden (S202), durch die Netzwerkeinrichtung, eines ersten PDSCH an die Endgeräteeinrichtung und Senden von ersten Downlink-Steuerungsinformationen, DCI, an die Endgeräteeinrichtung, wobei die ersten DCI ein erstes Feld und ein zweites Feld umfassen, das erste Feld dazu verwendet wird, eine Ressourcenposition, die durch den ersten PDSCH belegt ist, anzugeben, das erste Feld die Ressourcenposition basierend auf einem Ressourcenzuweisungstyp 2 angibt, das zweite Feld dazu verwendet wird, einen Typ des Ressourcenzuweisungstyps 2 anzugeben, und der Typ einen Typ der zentralisierten Ressourcenzuweisung oder einen Typ der verteilten Ressourcenzuweisung umfasst.

2. Verfahren nach Anspruch 1, wobei der erste Übertragungsmodus einen beliebigen von Übertragungsmodi TM 8, TM 9 und TM 10 umfasst.

3. Verfahren nach Anspruch 1, wobei die ersten DCI ferner ein drittes Feld umfassen und das dritte Feld dazu verwendet wird, der Endgeräteeinrichtung anzugeben, den ersten PDSCH basierend auf einem DMRS zu demodulieren.

4. Verfahren nach Anspruch 3, wobei der erste Übertragungsmodus einen beliebigen von Übertragungsmodi TM 7, TM 8, TM 9 und TM 10 umfasst.

5. Netzwerkeinrichtung, umfassend einen Speicher (702), einen Sendeempfänger (703), und einen Prozessor (701), wobei

der Speicher (702) ein Computerprogramm speichert; und
der Prozessor (701) dazu konfiguriert ist, das Computerprogramm, das in dem Speicher (702) gespeichert ist, aufzurufen, um das Verfahren nach einem der Ansprüche 1 bis 4 durchzuführen.

6. Computerlesbares Speichermedium, das dazu konfiguriert ist, Programmcode zu speichern, wobei der Programmcode eine Anweisung zum Durchführen des Verfahrens nach einem der Ansprüche 1 bis 4 beinhaltet.

7. Computerprogrammprodukt, umfassend eine Anweisung, wobei, wenn die Anweisung auf einem Computer ausgeführt wird, der Computer in die Lage versetzt wird, das Verfahren nach einem der Ansprüche 1 bis 4 durchzuführen.

**Revendications**

1. Procédé de transmission d'informations de commande de liaison descendante, comprenant :

la détermination (S201), par un dispositif réseau, qu'un dispositif terminal est dans un premier mode de transmission, dans lequel le premier mode de transmission est un mode de transmission dans lequel un canal partagé de liaison descendante physique, PDSCH, correspondant au premier mode de transmission est démodulé sur la base d'un signal de référence de démodulation, DMRS, correspondant au premier mode de transmission ; et
lors de la détermination que le dispositif terminal est dans le premier mode de transmission, l'envoi (S202), par le dispositif réseau, d'un premier PDSCH au dispositif terminal, et l'envoi de premières informations de commande de liaison descendante, DCI, au dispositif terminal, dans lequel les premières DCI comprennent un premier champ et un deuxième champ, le premier champ est utilisé pour indiquer une position de ressource occupée par le premier PDSCH, le premier champ indique la position de ressource sur la base d'un type d'allocation de ressource 2, le deuxième champ est utilisé pour indiquer un type du type d'allocation de ressource 2, et le type comprend un type d'allocation de ressource centralisée ou un type d'allocation de ressource distribuée.

2. Procédé selon la revendication 1, dans lequel le premier mode de transmission comprend l'un quelconque des modes de transmission TM 8, TM 9, et TM 10.

3. Procédé selon la revendication 1, dans lequel les premières DCI comprennent également un troisième champ et le troisième champ est utilisé pour indiquer au dispositif terminal de démoduler le premier PDSCH sur la base d'un DMRS.

4. Procédé selon la revendication 3, dans lequel le premier mode de transmission comprend l'un quelconque des modes de transmission TM 7, TM 8, TM 9 et TM 10.

5. Dispositif réseau, comprenant une mémoire (702), un émetteur-récepteur (703), et un processeur (701), dans lequel

la mémoire (702) stocke un programme informatique ; et
le processeur (701) est configuré pour invoquer le programme informatique stocké dans la mémoire (702) pour réaliser le procédé selon l'une quelconque des revendications 1 à 4.

6. Support de stockage lisible par ordinateur, configuré pour stocker un code de programme, et le code de programme comporte une instruction de réalisation du procédé selon l'une quelconque des revendications 1 à 4.

7. Produit de programme informatique comprenant une instruction, dans lequel lorsque l'instruction est exécutée sur un ordinateur, l'ordinateur est activé pour réaliser le procédé selon l'une quelconque des revendications 1 à 4.

Core network device

Network device

Network device

Terminal device

Terminal device

FIG. 1

FIG. 2

FIG. 3

FIG. 4

FIG. 5

600

Apparatus

Storage unit — 601

↕

Processing unit — 602

↕

Communication unit — 603

FIG. 6

700

Apparatus

703

Transceiver

701

Processor

704

702

Memory

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013025547 A2